# EUROPEAN PATENT APPLICATION

(11) **EP 4 826 805 A1**
(43) Date of publication of application: **21.10.2026**
(21) Application number: 24903767.2
(22) Date of filing: 12.12.2024
(51) Int. Cl.: H01M 4/66, H01M 10/052, H01M 10/0562

(54) **ELECTRODE FOR ALL-SOLID-STATE BATTERY AND ALL-SOLID-STATE BATTERY**

(30) Priority: 13.12.2023 JP 2023209953
(71) Applicant: Maxell, Ltd., Kyoto 618-8525 (JP)
(72) Inventor: FURUKAWA, Kazuki, Otokuni-gun, Kyoto 618-8525 (JP); KOMURA, Yurika, Otokuni-gun, Kyoto 618-8525 (JP); MASUDA, Shumpei, Otokuni-gun, Kyoto 618-8525 (JP); OTSUKA, Takumi, Otokuni-gun, Kyoto 618-8525 (JP); HAN, Ryong-tae, Otokuni-gun, Kyoto 618-8525 (JP)
(74) Representative: Diehl & Partner
(86) International application number: PCT/JP2024/044069
(87) International publication number: WO 2025/127114

(57) **Abstract**

In an all-solid-state battery using an electrode containing a sulfide-based solid electrolyte, corrosion of a current collector is suppressed, and the resistance of the electrodes is prevented from increasing. An electrode for an all-solid-state battery according to the present invention includes: a mixture containing an active material and a sulfide-based solid electrolyte; and a current collector, wherein the current collector is made of an alloy containing Ni and Cr, a Ni content in the alloy is 60% by mass or more, and a Cr content in the alloy is 0.1% by mass or more and 40% by mass or less. An all-solid-state battery according to the present invention includes: a positive electrode; a negative electrode; and a solid electrolyte layer, wherein at least one of the positive electrode and the negative electrode is the electrode for an all-solid-state battery according to the present invention.

## Description

### Technical Field

The present invention relates to an electrode for an all-solid-state battery that can be used in the assembly of an all-solid-state battery, and to an all-solid-state battery using the same.

### Background Art

In recent years, the development of portable electronic devices such as cellular phones and laptop personal computers, the practical use of electric vehicles, and the like have led to the need for compact and lightweight batteries that have a high capacity and a high energy density.

Currently, in lithium batteries, especially lithium-ion batteries, that can meet this demand, a lithium-containing composite oxide such as lithium cobalt oxide (LiCoO₂) or lithium nickel oxide (LiNiO₂) is used as a positive electrode active material, graphite or the like is used as a negative electrode active material, and an organic electrolyte solution containing an organic solvent and a lithium salt is used as a nonaqueous electrolyte.

Due to further development of devices that use lithium-ion batteries, there is a demand for lithium-ion batteries having an increased life-span, a higher capacity, and a higher energy density, and a high degree of reliability is also required for the lithium-ion batteries having an increased life-span, a higher capacity, and a higher energy density.

However, since an organic electrolyte solution used in a lithium-ion battery contains a flammable organic solvent, the organic electrolyte solution may abnormally generate heat when an abnormal situation such as a short circuit occurs in the battery. In recent years, as the energy density of lithium-ion batteries and the amount of organic solvent in the organic electrolyte solution have increased, there is growing need for reliability in lithium-ion batteries.

Under these circumstances, all-solid-state lithium batteries (all-solid-state batteries) not using organic solvents have also been considered. An all-solid-state lithium battery includes, instead of conventional organic solvent-based electrolytes, a sheet or molded body made of a solid electrolyte in which no organic solvents are used, and is highly reliable because there is no risk of the solid electrolyte abnormally generating heat.

As the solid electrolytes, sulfide-based solid electrolytes, hydride-based solid electrolytes, halide-based solid electrolytes, oxide-based solid electrolytes, and the like have been considered. In particular, sulfide-based solid electrolytes have high lithium-ion conductivity and are thus being rapidly developed, and all-solid-state batteries using sulfide-based solid electrolytes for the positive electrode, negative electrode, and solid electrolyte layer have also been proposed (Patent Document 1).

However, it was found that because sulfide-based solid electrolytes are highly reactive, when sulfide-based solid electrolytes are used for electrodes, they react with a current collector depending on the materials of the current collector during repeated charging and discharging, leading to a problem of increased resistance at the interface.

To address this, Patent Document 2 discloses a current collector for an all-solid-state battery in which a coating layer containing a powdery carbon material, acid-modified polyvinylidene fluoride, and poly-N-vinylpyrrolidone is formed on a surface of a sheet-like conductive substrate, and proposes that the corrosion resistance of the current collector is improved by the coating layer.

Also, Patent Documents 3 and 4 propose porous bodies made of an alloy of Ni and Cr and porous bodies made of an alloy of Ni, Cr, and Sn as porous metal that can be used for applications such as current collectors in lithium-ion secondary batteries, capacitors, fuel cells, and the like, as well as various filters and catalyst supports.

### Prior Art Documents

### Patent Document

Patent Document 1: JP 2023-022836A
Patent Document 2: JP 2020-198275A
Patent Document 3: JP 2012-149282A
Patent Document 4: JP 2014-065955A

### Disclosure of Invention

### Problem to be Solved by the Invention

It is an object of the present invention to suppress corrosion of a current collector and prevent an increase in electrode resistance in an all-solid-state battery using an electrode containing a sulfide-based solid electrolyte.

### Means for Solving Problem

An electrode for an all-solid-state battery according to the present invention includes: a mixture containing an active material and a sulfide-based solid electrolyte; and a current collector, wherein the current collector is made of an alloy containing Ni and Cr, a Ni content in the alloy is 60% by mass or more, and a Cr content in the alloy is 0.1% by mass or more and 40% by mass or less.

Also, an all-solid-state battery according to the present invention includes: a positive electrode; a negative electrode; and a solid electrolyte layer, wherein at least one of the positive electrode and the negative electrode is the electrode for an all-solid-state battery according to the present invention.

### Effects of the Invention

According to the present invention, it is possible to provide an electrode for an all-solid-state battery that contains a sulfide-based solid electrolyte, suppresses corrosion of the current collector, and suppresses an increase in resistance, and to provide an all-solid-state battery having the electrode and capable of suppressing an increase in internal resistance.

### Brief Description of Drawings

[FIG. 1] FIG. 1 is a scanning electron microscope photograph for illustrating a surface state of an electrode for an all-solid-state battery according to the present invention.
[FIG. 2] FIG. 2 is a cross-sectional view schematically showing an example of an all-solid-state battery according to the present invention.
[FIG. 3] FIG. 3 is a perspective view of a recessed container of the all-solid-state battery shown in FIG. 2.
[FIG. 4] FIG. 4 is a perspective view of an elastic conductive member of the all-solid-state battery shown in FIG. 2.

### Description of the Invention

### <Electrode for All-Solid-State Battery>

An electrode for an all-solid-state battery according to the present invention (may be simply referred to as "electrode" hereinafter) includes a mixture containing an active material and a sulfide-based solid electrolyte, and a current collector. Also, the current collector is made of an alloy containing Ni (nickel) and Cr (chromium) (may be referred to as "Ni-Cr alloy" hereinafter), the Ni content in the alloy is 60% by mass or more, and the Cr content in the alloy is 0.1% by mass or more and 40% by mass or less.

Because Ni has high conductivity, using a current collector made of Ni allows for lower electrode resistance and better collection of electricity generated from the mixture. However, if the electrode mixture contains a sulfide-based solid electrolyte, the current collector may corrode due to contact with the sulfide-based solid electrolyte, or sulfide gases such as hydrogen sulfide may be generated within the battery containing these electrodes, causing corrosion of the current collector due to these gases.

In view of this, in the electrode according to the present invention, a current collector made of an alloy containing Ni and Cr is used. In the current collector, the action of Cr can suppress corrosion caused by contact with the sulfide-based solid electrolyte and gases derived from the sulfide-based solid electrolyte.

However, in the current collector made of the alloy containing Ni and Cr, Cr also has the effect of reducing the conductivity of the current collector and increasing the resistance of the electrode.

In view of this, in the electrode according to the present invention, by setting the Ni content and the Cr content in the Ni-Cr alloy that constitutes the current collector to specific ranges, good conductivity and suppression of corrosion by the sulfide-based solid electrolyte are made possible, thereby lowering the initial resistance and suppressing an increase in resistance caused by corrosion.

As a result, in an all-solid-state battery using the electrodes of the present invention (the all-solid-state battery according to the present invention), the internal resistance can be reduced, and an increase in internal resistance during use or storage can be favorably suppressed.

The electrode according to the present invention can be used for at least one of the positive electrode and the negative electrode of a secondary battery (all-solid-state secondary battery), and can also be used for at least one of the positive electrode and the negative electrode of a primary battery (all-solid-state primary battery).

The electrode includes a mixture containing an active material and a sulfide-based solid electrolyte, and a current collector. For example, the electrode has a structure in which a layer formed by the mixture, i.e., a mixture layer, is provided on one or both sides of the current collector. Alternatively, when the current collector is a porous body, the electrode can have a structure in which at least a portion of the mixture layer enters pores of the current collector to become integrated.

When the electrode is the positive electrode of an all-solid-state battery, the mixture (positive electrode mixture) contains a positive electrode active material and a sulfide-based solid electrolyte.

As a positive electrode active material in a case where the electrode is the positive electrode of an all-solid-state primary battery, it is possible to use the same positive electrode active material that is used in conventionally known nonaqueous electrolyte primary batteries or the like. Specifically, examples thereof include manganese dioxide, lithium-containing manganese oxides [e.g., LiMn₃O₆, composite oxides, which have the same crystal structure (β-type structure, γ-type structure, or a structure in which β-type and γ-type are mixed) as manganese dioxide, and in which the Li content is 3.5% by mass or less, preferably 2% by mass or less, more preferably 1.5% by mass or less, and particularly preferably 1% by mass or less, or the like], lithium-containing composite oxides such as LiₐTi_{5/3}O₄ (4/3 ≤ a < 7/3); vanadium oxide; niobium oxide; titanium oxide; sulfides such as iron disulfide; graphite fluoride; silver sulfides such as Ag₂S; and nickel oxides such as NiO₂.

As a positive electrode active material in a case where the electrode is the positive electrode of an all-solid-state secondary battery, it is possible to use the same positive electrode active material that is used in conventionally known nonaqueous electrolyte secondary batteries or the like. Specific examples thereof include spinel-type lithium manganese composite oxides represented by Li₁₋ₓMᵣMn₂₋ᵣO₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and x and r satisfy 0 ≤ x ≤ 1 and 0 ≤ r ≤ 1), layered compounds represented by LiᵣMn₍₁₋ₛ₋ₜ₎NiₛMₜO₍₂₋ᵤ₎Fᵥ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy 0 ≤ r ≤ 1.2, 0 < s < 0.5, 0 ≤ t ≤ 0.5, u + v < 1, -0.1 ≤ u ≤ 0.2, and 0 ≤ v ≤ 0.1), lithium cobalt composite oxides represented by Li₁₋ₓCo₁₋ᵣMᵣO₂ (where M is at least one element selected from the group consisting of Al, Mg, Ti, V, Cr, Zr, Fe, Ni, Cu, Zn, Ga, Ge, Nb, Mo, Sn, Sb, and Ba, and x and r satisfy 0 ≤ x ≤ 1 and 0 ≤ r ≤ 0.5), lithium nickel composite oxides represented by Li₁₋ₓNi₁₋ᵣMᵣO₂ (where M is at least one element selected from the group consisting of Al, Mg, Ti, Zr, Fe, Co, Cu, Zn, Ga, Ge, Nb, Mo, Sn, Sb, and Ba, and x and r satisfy 0 ≤ x ≤ 1 and 0 ≤ r ≤ 0.5), olivine-type composite oxides represented by Li₁₊ₛ₋ₓM₁₋ᵣNᵣPO₄Fₛ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x, r, and s satisfy 0 ≤ x ≤ 1, 0 ≤ r ≤ 0.5, and 0 ≤ s ≤ 1), and pyrophosphate compounds represented by Li₂₋ₓM₁₋ᵣNᵣP₂O₇ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x and r satisfy 0 ≤ x ≤ 2 and 0 ≤ r ≤ 0.5). Only one of these may be used, or two or more of them may be used in combination.

When the electrode is the positive electrode of the all-solid-state secondary battery, the average particle size of the positive electrode active material is preferably 1 µm or more, and more preferably 2 µm or more, and preferably 10 µm or less, and more preferably 8 µm or less. Note that the positive electrode active material may be primary particles or secondary particles obtained through aggregation of primary particles. When a positive electrode active material having an average particle size in the above range is used, a large interface with the solid electrolyte contained in the positive electrode can be obtained, thus improving output characteristics of the battery.

The term "the average particle size of various particles (the positive electrode active material, a solid electrolyte, and the like)" used in the specification of the present application refers to a 50% diameter value (D₅₀) in a volume-based cumulative fraction when an integral volume is obtained in order from the smallest particle size using a particle size distribution measurement apparatus (Microtrac HRA 9320 manufactured by Nikkiso Co., Ltd., or the like).

When the electrode is the positive electrode of an all-solid-state secondary battery, the positive electrode active material preferably has, on its surface, a reaction suppressing layer for suppressing a reaction between the positive electrode active material and the solid electrolyte contained in the electrode.

If the positive electrode active material comes into direct contact with the solid electrolyte in the mixture layer (positive electrode mixture layer), there is a risk that the solid electrolyte will be oxidized and a resistive layer will be formed, which will lead to a reduction in ion conductivity in the positive electrode mixture layer. It is possible to suppress a reduction in ion conductivity in the positive electrode mixture layer due to oxidation of the solid electrolyte by providing the reaction suppressing layer for suppressing a reaction with the solid electrolyte on the surface of the positive electrode active material to prevent direct contact between the positive electrode active material and the solid electrolyte.

The reaction suppressing layer is only required to be made of a material that has ion conductivity and can suppress a reaction between the positive electrode active material and the solid electrolyte. As a material that can constitute the reaction suppressing layer, an oxide that contains, for example, Li and at least one element selected from the group consisting of Nb, P, B, Si, Ge, Ti, and Zr can be used. More specific examples include an Nb-containing oxide such as LiNbO₃, as well as Li₃PO₄, Li₃BO₃, Li₂SO₄, Li₄SiO₄, Li₄GeO₄, LiTiO₃, LiZrO₃, Li₂WO₄, and the like. The reaction suppressing layer may contain only one of these oxides, two or more of these oxides, or a composite compound formed by two or more of these oxides. Among these oxides, it is preferable to use an Nb-containing oxide, and more preferable to use LiNbO₃.

Preferably, 0.1 to 1.0 part by mass of the reaction suppressing layer is present on the surface of the positive electrode active material relative to 100 parts by mass of the positive electrode active material. When the amount of the reaction suppressing layer is within this range, it is possible to favorably suppress a reaction between the positive electrode active material and the solid electrolyte.

Examples of a method for forming the reaction suppressing layer on the surface of the positive electrode active material include a sol-gel method, a mechano-fusion method, a CVD method, a PVD method, an ALD method, and the like.

From the viewpoint of increasing the energy density of the all-solid-state battery in which the electrode is used as the positive electrode, the content of the positive electrode active material in the positive electrode mixture is preferably 60% by mass to 85% by mass.

It is possible to add a conductive assistant to the positive electrode mixture. Specific examples thereof include carbon materials such as graphite (natural graphite, artificial graphite), graphene, carbon black, carbon nanofibers, and carbon nanotubes. Note that, for example, in a case where Ag₂S is used for an active material, Ag, which has conductivity, is generated during the discharge reaction, and thus a conductive assistant does not need to be added. When a conductive assistant is added to the positive electrode mixture, the content of the conductive assistant is preferably 1.0 part by mass or more, and is preferably 7.0 parts by mass or less, and more preferably 6.5 parts by mass or less, where the content of the positive electrode active material is 100 parts by mass.

It is possible to add a binder to the positive electrode mixture. Specific examples thereof include fluororesins such as polyvinylidene fluoride (PVDF). Although the positive electrode mixture contains a sulfide-based solid electrolyte, when the action of this sulfide-based solid electrolyte ensures good moldability for forming the positive electrode mixture layer without the use of a binder, then the positive electrode mixture does not need to contain a binder.

In a case where the positive electrode mixture requires a binder, the binder content is preferably 15% by mass or less, and preferably 0.5% by mass or more. On the other hand, when moldability of the positive electrode mixture can be obtained without the need for a binder, the binder content is preferably 0.5% by mass or less, more preferably 0.3% by mass or less, and even more preferably 0% by mass (i.e., no binder is added).

The positive electrode mixture contains a sulfide-based solid electrolyte. Examples of the sulfide-based solid electrolytes include particles of Li₂S-P₂S₅-based glass, Li₂S-SiS₂-based glass, Li₂S-P₂S₅-GeS₂-based glass, Li₂S-B₂S₃-based glass, and the like. In addition, it is possible to use thio-LISICON-type sulfide-based solid electrolyte [solid electrolytes represented by general formula Li_{12-12a-b+c+6d-e}M¹_{3+a-b-c-d}M²_{b}M³_{c}M⁴_{d}M⁵₁₂₋ₑXₑ (where M¹ represents Si, Ge, or Sn, M² represents P or V, M³ represents Al, Ga, Y, or Sb, M⁴ represents Zn, Ca, or Ba, M⁵ represents S, or S and O, X represents F, Cl, Br, or I, and a, b, c, d, and e satisfy 0 ≤ a < 3, 0 ≤ b + c + d ≤ 3, and 0 ≤ e ≤ 3), such as Li₁₀GeP₂S₁₂ and Li_{9.54}Si_{1.74}P_{1.44}S_{11.7}Cl_{0.3}], and sulfide-based solid electrolytes having an argyrodite-type crystal structure (argyrodite-type solid electrolytes), which have attracted attention in recent years due to their high lithium-ion conductivity.

Among these solid electrolytes, sulfide-based solid electrolytes containing Li and P are more preferable because sulfide-based solid electrolytes have high lithium-ion conductivity, and in particular, argyrodite-type solid electrolytes are even more preferable because argyrodite-type solid electrolytes have high lithium-ion conductivity and high chemical stability.

As the argyrodite-type solid electrolyte, those represented by the following general composition formula (1), general composition formula (2), or general composition formula (3), such as Li₆PS₅Cl, are particularly preferable.

Li₇₋ₖPS₆₋ₖXₖ (1)

In the general composition formula (1), X represents one or more halogen elements, and k satisfies 0.2 < k < 2.0.

Li_{7-x+y}PS₆₋ₓCl_{x+y} (2)

In the general composition formula (2), x and y satisfy 0.05 ≤ y ≤ 0.9, -3.0x+1.8 ≤ y ≤ -3.0x+5.7.

Li₇₋ₐPS₆₋ₐCl_{b}Br_{c} (3)

In the general composition formula (3), a, b, and c satisfy a = b+c, 0 < a ≤ 1.8, and 0.1 ≤ b/c ≤ 10.0.

The positive electrode mixture can contain other solid electrolytes in addition to the sulfide-based solid electrolyte. Examples of solid electrolytes that can be added to the positive electrode mixture along with sulfide-based solid electrolytes include hydride-based solid electrolytes, halide-based solid electrolytes, and oxide-based solid electrolytes.

Examples of the hydride-based solid electrolytes include LiBH₄, and solid solutions of LiBH₄ and a following alkali metal compound (e.g., solid solutions in which the mole ratio between LiBH₄ and the alkali metal compound is 1:1 to 20:1). As the alkali metal compound used in the above-mentioned solid solution, at least one selected from the group consisting of lithium halides (such as LiI, LiBr, LiF, and LiCl), rubidium halides (such as RbI, RbBr, RbF, and RbCl), cesium halides (such as CsI, CsBr, CsF, and CsCl), lithium amides, rubidium amides, and cesium amides can be used.

Examples of the halide-based solid electrolyte include monoclinic LiAlCl₄, defect spinel or layered LiInBr₄, and monoclinic Li₆₋₃ₘYₘX₆ (where m satisfies 0 < m < 2, and X = Cl or Br). It is also possible to use known halide-based solid electrolytes disclosed in WO 2020/070958 and WO 2020/070955.

Examples of the oxide-based solid electrolytes include garnet-type Li₇La₃Zr₂O₁₂, NASICON-type Li_{1+O}Al_{1+O}Ti_{2-O}(PO₄)₃ and Li₁₊ₚAl₁₊ₚGe₂₋ₚ(PO₄)₃, perovskite-type Li_{3q}La_{2/3-q}TiO₃, and the like.

From the viewpoint of reducing grain boundary resistance, the average particle size of the solid electrolyte is preferably 0.1 µm or more, and more preferably 0.2 µm or more. On the other hand, from the viewpoint of forming a sufficient contact interface between the active material and the solid electrolyte, the average particle size of the solid electrolyte is preferably 10 µm or less, more preferably 5 µm or less, and particularly preferably 1 µm or less.

From the viewpoint of further enhancing ion conductivity within the positive electrode and further improving output characteristics of the all-solid-state battery, the content of the solid electrolyte in the positive electrode mixture is preferably 10 parts by mass or more, and more preferably 15 parts by mass or more, when the content of the positive electrode active material is 100 parts by mass. However, if the amount of the solid electrolyte in the positive electrode mixture is too large, the amounts of other components will be reduced, which may reduce effects of these components. Therefore, the content of the solid electrolyte in the positive electrode mixture is preferably 65 parts by mass or less, and more preferably 60 parts by mass or less, when the content of the positive electrode active material is 100 parts by mass.

When the positive electrode mixture contains a sulfide-based solid electrolyte and other solid electrolytes, the content of the sulfide-based solid electrolyte in the total content of solid electrolytes in the positive electrode mixture is preferably 20% by mass or more, more preferably 70% by mass or more, and may be 100% by mass.

When the electrode is the negative electrode of an all-solid-state battery, the mixture (negative electrode mixture) contains a negative electrode active material and a sulfide-based solid electrolyte.

Examples of the negative electrode active material include carbon materials such as graphite, lithium titanium oxides (such as lithium titanate), simple substances and compounds (such as oxides) that contain elements such as Si or Sn, and alloys thereof. It is also possible to use, as negative electrode active materials, lithium metal and lithium alloys (lithium-aluminum alloy, lithium-indium alloy, and the like).

From the viewpoint of increasing the energy density of the all-solid-state battery in which the electrode is used as the negative electrode, the content of the negative electrode active material in the negative electrode mixture is preferably 40% by mass to 80% by mass.

It is possible to add a conductive assistant to the negative electrode mixture. Specific examples thereof include conductive assistants that are the same as those listed above to be added to the positive electrode mixture. The content of the conductive assistant in the negative electrode mixture is preferably 10 to 30 parts by mass when the content of the negative electrode active material is 100 parts by mass.

Also, it is possible to add a binder to the negative electrode mixture. Specific examples thereof include binders that are the same as those listed above to be added to the positive electrode mixture. Although the negative electrode mixture contains a sulfide-based solid electrolyte, when the action of this sulfide-based solid electrolyte ensures good moldability for forming the mixture layer (negative electrode mixture layer) without the use of a binder, then the negative electrode mixture does not need to contain a binder.

In a case where the negative electrode mixture requires a binder, the binder content is preferably 15% by mass or less, and preferably 0.5% by mass or more. On the other hand, when moldability of the negative electrode mixture can be obtained without the need for a binder, the binder content is preferably 0.5% by mass or less, more preferably 0.3% by mass or less, and even more preferably 0% by mass (i.e., no binder is added).

The negative electrode mixture contains a sulfide-based solid electrolyte. Specific examples thereof include sulfide-based solid electrolytes that are the same as those listed above to be added to the positive electrode mixture. Among the sulfide-based solid electrolytes listed above, sulfide-based solid electrolytes containing Li and P are preferable because such sulfide-based solid electrolytes have high lithium-ion conductivity, and argyrodite-type solid electrolytes are more preferable because argyrodite-type solid electrolytes have high lithium-ion conductivity and high chemical stability, and solid electrolytes represented by the general composition formula (1), the general composition formula (2), or the general composition formula (3) are even more preferable.

The negative electrode mixture can also contain other solid electrolytes along with the sulfide-based solid electrolyte. Examples of solid electrolytes that can be added to the negative electrode mixture along with the sulfide-based solid electrolyte include hydride-based solid electrolytes, halide-based solid electrolytes, and oxide-based solid electrolytes that are the same as those listed above to be added to the positive electrode mixture.

For the same reasons as in the case of the positive electrode mixture, the average particle size of the solid electrolyte made of the negative electrode mixture is preferably 0.1 µm or more, more preferably 0.2 µm or more, and preferably 10 µm or less, and more preferably 5 µm or less.

From the viewpoint of further enhancing ion conductivity within the negative electrode and further improving output characteristics of the all-solid-state battery, the content of the solid electrolyte in the negative electrode mixture is preferably 30 parts by mass or more, and more preferably 35 parts by mass or more, when the content of the negative electrode active material is 100 parts by mass. However, if the amount of the solid electrolyte in the negative electrode mixture is too large, the amounts of other components will be reduced, which may reduce effects of these components. Therefore, the content of the solid electrolyte in the negative electrode mixture is preferably 130 parts by mass or less, and more preferably 110 parts by mass or less, when the content of the negative electrode active material is 100 parts by mass.

When the negative electrode mixture contains a sulfide-based solid electrolyte and other solid electrolytes, the content of the sulfide-based solid electrolyte in the total content of solid electrolytes in the negative electrode mixture is preferably 20% by mass or more, more preferably 70% by mass or more, and may be 100% by mass.

The thickness of the mixture (thickness of the mixture layer) in the electrode is preferably 0.2 mm or more, more preferably 0.5 mm or more, and even more preferably 0.7 mm or more, while it is preferably 3 mm or less, more preferably 2 mm or less, and even more preferably 1.5 mm or less.

The electrode has a current collector made of an alloy containing Ni and Cr. The Ni content in the alloy is 60% by mass or more, preferably 70% by mass or more, and more preferably 80% by mass or more, from the viewpoint of improving the conductivity of the current collector and lowering the resistance of the electrode.

The Cr content in the alloy is 0.1% by mass or more, preferably 3% by mass or more, and more preferably 10% by mass or more, from the viewpoint of suppressing corrosion of the current collector due to a reaction with the sulfide-based solid electrolyte and a reaction with the gas generated from the sulfide-based solid electrolyte, thereby suppressing an increase in electrode resistance over time. However, if the Cr content in the alloy is too high, the conductivity of the current collector may decrease, potentially increasing the electrode resistance. Therefore, the Cr content in the alloy is 40% by mass or less, preferably 30% by mass or less, and more preferably 20% by mass or less.

As can be seen from the Ni content and the Cr content in the alloy constituting the current collector described above, the composition of the alloy constituting the current collector is typically Cr in the aforementioned amount, with the balance being Ni. However, the alloy may also contain elements other than Ni and Cr, (e.g., Sn, Fe, Co, Ti, Al, Mo, etc.) in a total content of 39.9% by mass or less. In other words, the composition of the alloy constituting the current collector is such that the total content of Ni and Cr is 60.1% by mass or more, and elements other than Ni and Cr may be included in a range of 39.9% by mass or less.

In addition to a foil made of the aforementioned alloy, porous metal substrates such as a punched metal, a mesh, an expanded metal, and a foamed metal can be used as current collectors. Although the current collector has different thicknesses depending on the type, in the case of the foil, the thickness of the current collector is preferably 10 µm or more, in the case of a punched metal, mesh, or expanded metal, the thickness of the current collector is preferably 50 µm or more, and in the case of a foamed metal substrate such as a foamed metal, the thickness of the current collector is preferably 100 µm or more. In the case of the foil, the thickness of the current collector is preferably 50 µm or less, in the case of a punched metal, mesh, or expanded metal, the thickness of the current collector is preferably 300 µm or less, and in the case of a foamed metal substrate such as a foamed metal, the thickness of the current collector is preferably 3000 µm or less.

Among such current collectors, it is preferable to use a porous metal substrate because it offers higher current collection efficiency, and it is even more preferable to use a foamed metal substrate [such as "Celmet (registered trademark)" manufactured by Sumitomo Electric Industries, Ltd.]. When the current collector is constituted by a porous metal substrate, at least a portion of the mixture (mixture layer) enters the pores, thereby improving the adhesion between the current collector and the mixture. Furthermore, when the current collector is constituted by a foamed metal substrate, the area of contact between the current collector and the mixture layer becomes larger, making it possible to lower the resistance of an electrode.

In other words, it is preferable that the electrode has a foamed metal substrate as a current collector, and pores of the foamed metal substrate are filled with at least a portion of the mixture. More specifically, preferably, the foamed metal substrate, which is the current collector of the electrode, has at least a portion, including an end on the mixture layer side, embedded in a surface layer of the mixture layer, and thus the portion is integrated with the mixture layer.

Note that such a foamed metal substrate is usually compressed and its thickness decreases when an electrode is produced together with the mixture. Thus, the thickness of the foamed metal substrate before use in the electrode is greater than that inside the electrode. The thickness of the foamed metal substrate before compression is preferably 0.1 mm or more, more preferably 0.3 mm or more, and particularly preferably 0.5 mm or more, while it is preferably 3 mm or less, more preferably 2 mm or less, and particularly preferably 1.5 mm or less. The foamed metal substrate is compressed in the thickness direction when an electrode is manufactured through a process of applying pressure to the mixture and the metal substrate in, for example, the method for manufacturing an electrode stacked body, which will be described later, and the thickness of the foamed metal substrate will be as follows.

The porosity of the foamed metal substrate before compression is preferably 80% or more, more preferably 90% or more, and even more preferably 95% or more, so that the pores of the metal substrate can be readily filled with the mixture, for example, in a process of applying pressure to the foamed metal substrate and the mixture, and the metal substrate and the mixture layer can be readily integrated with each other. On the other hand, in order to increase conductivity by maintaining the volume of the foamed metal substrate at a certain level or more, the porosity is preferably 99.5% or less, more preferably 99% or less, and particularly preferably 98.5% or less.

From the viewpoint of adjusting the porosity of the porous metal substrate (especially the foamed metal substrate) to a favorable range, the weight per area of the porous metal substrate is preferably 600 g/m² or less, and more preferably 400 g/m² or less. If the weight per area of the porous metal substrate (especially the foamed metal substrate) is too small, the resistance of the current collector will increase. Therefore, the weight per area is preferably 200 g/m² or more, and more preferably 300 g/m² or more.

Furthermore, for the same reasons as described above, the density of the foamed metal substrate (an apparent density calculated including the volume of pores) is preferably 0.22 g/cm³ or more, and preferably 0.66 g/cm³ or less.

Furthermore, from the viewpoint of more reliably integrating the metal substrate and the mixture layer with each other, in the case of the electrode, which has a foamed metal substrate as a current collector and has at least a portion, including an end on the mixture layer side of the metal substrate, embedded in a surface layer of the mixture layer, and thus the portion is integrated with the mixture layer, the thickness of the portion of the foamed metal substrate embedded in the mixture layer is preferably 10% or more, and more preferably 20% or more of the thickness of the metal substrate (the thickness of the entire foamed metal substrate, including the thickness of the portion where the mixture layer coexists; unless otherwise specified, the same applies to the thickness of the foamed metal substrate hereinafter).

In the case of the electrode, which has a foamed metal substrate as a current collector and has at least a portion, including an end on the mixture layer side of the metal substrate, embedded in a surface layer of the mixture layer, and thus the portion is integrated with the mixture layer, in order to reduce resistance when the electrode is brought into contact with the conductive path in the exterior body of the all-solid-state battery (details will be described later), it is desirable that an end of the foamed metal substrate opposite to the mixture layer side (may be referred to as a "surface side end") is not embedded in the mixture layer, and that the end of the electrode (the surface of the electrode) is constituted only by the metal substrate. That is, for example, in a later-described method for manufacturing an electrode stacked body, when an electrode is manufactured through a process of applying pressure to the mixture and the foamed metal substrate, it is desirable that the metal substrate is compressed in the thickness direction, the pores at the surface side end of the metal substrate are crushed and eliminated, and only the metal substrate is exposed on the electrode surface. However, some of the pores at the surface side end of the foamed metal substrate may not be crushed and remain as pores, or the pores may be filled with the mixture, and part of the mixture may be exposed on the surface of the electrode together with the surface side end of the metal substrate as long as the resistance of contact with the conductive path is not significantly affected. In other words, as long as the surface side end of the foamed metal substrate can be exposed on the electrode surface, the entire metal substrate (100% of the thickness of the foamed metal substrate) may be embedded in the surface layer of the mixture layer. When the pores of the foamed metal substrate are filled with the mixture all the way to the surface of the electrode, the integration of the mixture and the metal substrate can be made more reliable.

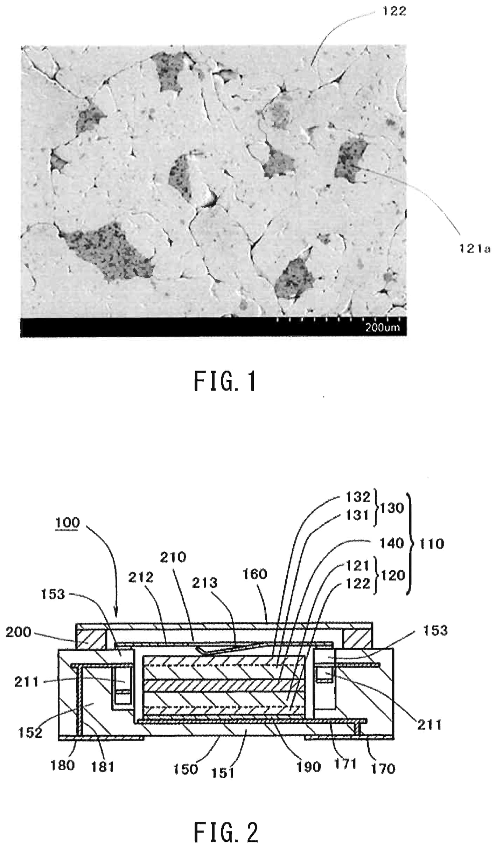

FIG. 1 shows a scanning electron microscope (SEM) photograph for illustrating a surface state of an electrode having a foamed metal substrate as a current collector (note that the SEM photograph shown in FIG. 1 is not a photograph of the surface of the electrode of the present invention, but rather a photograph of an electrode having a surface state similar to that of the electrode of the present invention (the electrode corresponding to Comparative Example 1 described later), and is shown solely for the purpose of illustrating the surface state of the electrode of the present invention). On the electrode surface shown in FIG. 1, an end of the foamed metal substrate 122 of the electrode is exposed, but part of a mixture 121a is also exposed on the electrode surface due to entering pores present at the end of the metal substrate.

However, the greater the ratio (area ratio) of the mixture exposed on the electrode surface, the greater the resistance of contact between the foamed metal substrate and the conductive path of the all-solid-state battery is. Thus, the percentage of the area of the exposed mixture to the electrode surface in a plan view is set to preferably 50% or less, more preferably 25% or less, even more preferably 15% or less, and particularly preferably 10% or less.

In the electrode having the foamed metal substrate as a current collector, when at least a portion of the metal substrate is to be embedded in the surface layer of the mixture layer, from the viewpoint of more reliably integrating the metal substrate and the mixture layer with each other, the thickness of the foamed metal substrate is preferably 1% or more, more preferably 2% or more, and particularly preferably 3% or more of the total thickness of the mixture layer (The total thickness includes the thickness of a portion coexisting with the foamed metal substrate. The "thickness of the mixture layer" below refers to the "total thickness of the mixture layer" here, unless otherwise stated.). Also, from the viewpoint of improving a filling property of the mixture layer in the electrode, the thickness of the foamed metal substrate is preferably 30% or less, more preferably 20% or less, and particularly preferably 10% or less of the thickness of the mixture layer.

In an electrode having a foamed metal substrate as a current collector, the thickness of the foamed metal substrate (thickness after electrode molding) is preferably 10 µm or more, more preferably 20 µm or more, and particularly preferably 30 µm or more, while it is preferably 300 µm or less, more preferably 200 µm or less, and particularly preferably 100 µm or less.

The thickness of the foamed metal substrate and the thickness of the mixture layer in the electrode are respectively determined from the maximum width in the thickness direction of a region in which the foamed metal substrate can be confirmed and a region in which the mixture can be confirmed in an image obtained by observing, using a SEM at a magnification of 50 to 1000, a cross-section of the electrode in the thickness direction. Also, the thickness of the portion of the foamed metal substrate embedded in the mixture layer is determined from the maximum width in the thickness direction of a portion where the region in which the metal substrate can be confirmed overlaps the region in which the mixture can be confirmed (the values in Examples described later were determined using these methods).

Also, the ratio (area ratio) of the mixture exposed on the surface of the electrode is determined by a ratio (A/B) of the total area (A) of portions where the mixture is exposed to the area (B) of the entire electrode in an image obtained by observing the electrode surface using a SEM at a magnification of 50 to 200 (the values in Examples described later were determined using this method).

The electrode can be manufactured by molding a mixture into molded bodies (such as pellets) of the pressurized mixture and attaching molded bodies to a current collector; by applying pressure to the mixture and the current collector at the same time to mold the mixture and integrate the molded bodies with the current collector simultaneously; or through a process of applying a mixture-containing composition, in which the mixture is dispersed in a solvent, to a current collector, drying the composition, and applying pressure as needed.

As the solvent used in the mixture-containing composition, it is preferable to select a solvent that is less likely to deteriorate the solid electrolyte. In particular, a sulfide-based solid electrolyte and a hydride-based solid electrolyte cause a chemical reaction with a minute amount of water, and it is therefore preferable to use a non-polar aprotic solvent as typified by a hydrocarbon solvent such as hexane, heptane, octane, nonane, decane, decaline, toluene, or xylene. In particular, it is more preferable to use a super dehydrated solvent with a water content of 0.001% by mass (10 ppm) or less. It is also possible to use a fluorine-based solvent such as "Vertrel (registered trademark)" available from Du Pont-Mitsui Fluorochemicals Co., Ltd., "Zeorora (registered trademark)" available from Zeon Corporation Japan, and "Novec (registered trademark)" available from Sumitomo 3M Ltd., and a non-aqueous organic solvent such as dichloromethane or diethyl ether.

### <All-Solid-State Battery>

An all-solid-state battery according to the present invention includes: a positive electrode; a negative electrode; and a solid electrolyte layer, and at least one of the positive electrode and the negative electrode is the electrode for an all-solid-state battery according to the present invention. Note that the all-solid-state battery according to the present invention can be configured as a secondary battery (all-solid-state secondary battery) or a primary battery (all-solid-state primary battery) by selecting an electrode configuration (an active material or the like).

The positive electrode and the negative electrode are used in an all-solid-state battery, for example, in the form of an electrode stacked body, which is formed by stacking the positive electrode and the negative electrode with a solid electrolyte layer interposed therebetween. This electrode stacked body is then enclosed within an exterior body to form the all-solid-state battery.

FIG. 2 shows a longitudinal cross-sectional view schematically showing an example of the all-solid-state battery according to the present invention. An all-solid-state battery 100 shown in FIG. 2 has an electrode stacked body 110 having a positive electrode 120, a negative electrode 130, and a solid electrolyte layer 140 interposed therebetween, and this electrode stacked body 110 is enclosed in a battery container (exterior body) formed by a recessed container 150 and a sealing body 160.

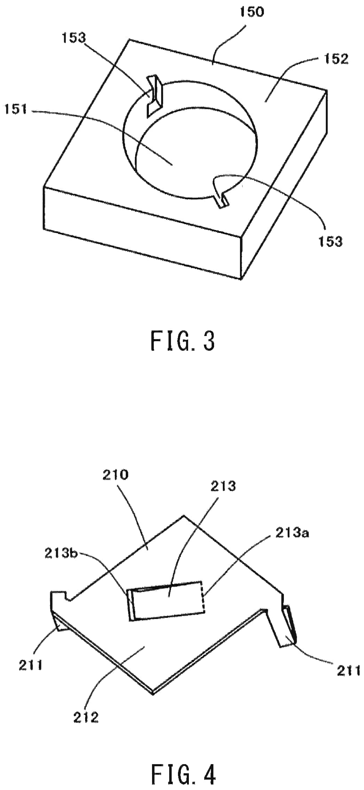

FIG. 3 shows a perspective view schematically showing the recessed container 150 that constitutes a battery container of the all-solid-state battery 100 shown in FIG. 2. The recessed container 150 is constituted by a bottom 151 and a side wall 152 as shown in FIG. 3, and has an opening that is open to the upper side in FIG. 3, and has a recessed cross-section.

The battery 100 shown in FIG. 2 is an example in which the battery has a positive electrode 120 having a foamed metal substrate 122 as a current collector and a negative electrode 130 having a foamed metal substrate 132 as a current collector. Specifically, the positive electrode 120 has a positive electrode mixture layer 121 and the foamed metal substrate 122, and the entire foamed metal substrate 122, including an end on the positive electrode mixture layer 121 side, is embedded in the surface layer of the positive electrode mixture layer 121. In other words, the entire area where the foamed metal substrate 122 is present corresponds to a region where the positive electrode mixture layer and the foamed metal substrate coexist. Furthermore, in the positive electrode 120, the end of the foamed metal substrate 122 opposite to the positive electrode mixture layer 121 side (a lower end in FIG. 2) is exposed. Note that the dotted line in the positive electrode 120 indicates a boundary in the positive electrode mixture layer 121 between the region where the positive electrode mixture layer and the foamed metal substrate do not coexist and the region where the positive electrode mixture layer and the foamed metal substrate coexist, and corresponds to the end of the foamed metal substrate 122 on the positive electrode mixture layer 121 side.

Also, the negative electrode 130 has a negative electrode mixture layer 131 and the foamed metal substrate 132, and the entire foamed metal substrate 132, including an end on the negative electrode mixture layer 131 side, is embedded in the surface layer of the negative electrode mixture layer 131. In other words, the entire area where the foamed metal substrate 132 is present corresponds to a region where the negative electrode mixture layer and the foamed metal substrate coexist. Furthermore, in the negative electrode 130, the end of the foamed metal substrate 132 opposite to the negative electrode mixture layer 131 side (an upper end in FIG. 2) is exposed. Note that the dotted line in the negative electrode 130 indicates a boundary in the negative electrode mixture layer 131 between the region where the negative electrode mixture layer and the foamed metal substrate do not coexist and the region where the negative electrode mixture layer and the foamed metal substrate coexist, and corresponds to the end of the foamed metal substrate 132 on the negative electrode mixture layer 131 side.

The lower side of the recessed container 150 in FIG. 2 is provided with connection terminals 170 and 180 for electrically connecting to a device in which the all-solid-state battery 100 is used. Furthermore, the connection terminal 170 is electrically connected to a conductive path 171 that extends from the inside of the recessed container 150 to the external connection terminal 170. The conductive path 171 is electrically connected to the positive electrode 120 of the electrode stacked body 110 accommodated in the recessed container 150, thereby creating electrical conduction between the positive electrode 120 of the electrode stacked body 110 and the connection terminal 170. In the all-solid-state battery 100 shown in FIG. 2, a porous metal substrate 190, similar to that used in current collectors, is interposed between the positive electrode 120 of the electrode stacked body 110 and the conductive path 171 as a conductive connecting member. The action of this porous metal substrate 190 enhances the conductivity between the positive electrode 120 and the conductive path 171, and also suppresses variations in the internal resistance of individual batteries when many all-solid-state batteries are produced (details will be described later).

The connection terminal 180 is electrically connected to a conductive path 181 that extends from the inside of the recessed container 150 to the external connection terminal 180. This conductive path 181 is electrically connected to the negative electrode 130 via an elastic conductive member 210 that is disposed above the electrode stacked body 110 in FIG. 2 and is in contact with the negative electrode 130 of the electrode stacked body 110. This results in electrical conduction between the negative electrode 130 of the electrode stacked body 110 and the connection terminal 180.

The side wall 152 of the recessed container 150 has supports 153 that support the elastic conductive member 210. In the all-solid-state battery 100, as shown in FIG. 3, each support 153 is a protruding portion that is formed at an upper end of an inner peripheral surface of the side wall 152 and protrudes in a radial direction, but the support for holding an elastic conductive member of the all-solid-state battery may have another shape as long as it can support the elastic conductive member 210.

FIG. 4 shows a perspective view schematically showing the elastic conductive member 210 of the all-solid-state battery 100 shown in FIG. 2. The elastic conductive member 210 is constituted by, for example, a thin metal plate, and as shown in FIG. 4, has a rectangular shape in a plan view, but can have a shape corresponding to the shape, in a plan view, of the electrode stacked body or the recessed container of the all-solid-state battery.

The recessed container 150 of the all-solid-state battery 100 shown in FIG. 2 has multiple supports 153 for supporting the elastic conductive member 210 at the upper end of its side wall 152. Each support 153 is formed as a protruding portion that protrudes in the circumferential direction of the inner peripheral surface of the side wall 152. In more detail, the supports 153 are top walls of a plurality of cavities formed outward in the radial direction on the inner peripheral surface of the side wall 152. Also, a portion of the conductive path 181 is exposed on the lower face and the side face of each top wall. The supports 153 are formed in a number at least corresponding to the number of supported portions 211 of the elastic conductive member 210, which will be described later.

The elastic conductive member 210 has the supported portions 211 and a flat portion 212. A plurality of supported portions 211 are provided at positions corresponding to the positions of the supports 153 on the outer side in the radial direction in a plan view of the electrode stacked body 110 in the all-solid-state battery 101. The supported portions 211 are hook-shaped locking pieces that are locked to the lower faces of the top walls of the supports 153, and extend from the edge of the elastic conductive member 210 toward the supports 153 (downward in FIG. 2). Also, each supported portion 211 has a leading end that is folded back toward the corresponding support 153, i.e., the lower face of the corresponding top wall. The leading end of the supported portion 211 is in contact with the conductive path 181 exposed on the lower face and the side face of the top wall of the support 153. As a result, the elastic conductive member 210 functions as a current collector and forms part of the conductive path that electrically connects the negative electrode 130 and the connection terminal 180 to each other.

The elastic conductive member 210 is supported by the supports 153 formed on the inner peripheral surface of the side wall 152 of the recessed container 150, and covers a part of the opening of the recessed container 150. The area of the elastic conductive member 210 in a plan view is smaller than the area of the opening of the recessed container 150. Even if the hook-shaped locking pieces of the elastic conductive member 210 are not locked to the lower face of the top walls of the supports 153, it is presumed that the elastic conductive member 210 is locked to the side wall 152 of the recessed container 150 as long as the elastic conductive member 210 can be fixed in a state in which the hook-shaped locking pieces are pressed into the cavities formed in the inner peripheral surface of the side wall 152.

As shown in FIGS. 2 and 4, the elastic conductive member 210 has a spring part 213 that rises from the flat portion 212 toward the negative electrode 130 of the electrode stacked body 110, and the spring part 213 is in contact with the upper face of the negative electrode 130 (its porous metal substrate 132) of the electrode stacked body 110 in FIG. 2 and presses the electrode stacked body 110 toward the inner bottom face of the recessed container 150.

In the elastic conductive member having the spring part, the shape of the spring part is not particularly limited as long as it can press the electrode stacked body toward the inner bottom face of the recessed container. The spring part 213 of the elastic conductive member 210 shown in FIGS. 2 and 4 is a spring piece inclined from the flat portion 212 toward the negative electrode 130 of the electrode stacked body 110 (hereinafter, the spring part 213 may be referred to as a "spring piece 213"). As shown in FIG. 4, the spring piece 213 is formed by cutting out a part of the flat portion 212 in a U-shape, and is supported by the flat portion 212 in a cantilever manner. That is, the spring piece 213 of the elastic conductive member 210 shown in FIGS. 2 and 4 is a flat spring. With the elastic conductive member 210 having such a configuration, it is sufficient to form the spring piece 213 on a part of the flat portion 212, and thus the elastic conductive member and the all-solid-state battery can be produced more easily. Also, by forming the spring piece 213 by cutting out the flat portion 212, the elastic conductive member, and hence the all-solid-state battery, can be produced even more easily.

The spring piece 213 has a boundary 213a with the flat portion 212, and a leading end 213b, and in order to bring the spring piece 213 into contact with the negative electrode 130 of the electrode stacked body 110, the spring piece 213 is bent at the boundary 213a and inclined to the electrode stacked body 110 side from the boundary 213a toward the leading end 213b. However, if the leading end 213b of the spring piece 213 is brought into contact with the negative electrode 130 of the electrode stacked body 110, there is a risk that the negative electrode 130 may be damaged by the leading end 213b. Therefore, in the elastic conductive member 210 shown in FIGS. 2 and 4, the spring piece 213 is bent such that the leading end 213b points upward in FIG. 2, and the spring piece 213 comes into contact with the negative electrode 130 at a portion other than the leading end 213b.

In the elastic conductive member 210 before the all-solid-state battery 100 is assembled, the height from the bottom face of the flat portion 212 to a point where the spring piece 213 comes into contact with the negative electrode 130 (the height of the spring piece 213) is greater than the height from the bottom face of the flat portion 212 of the elastic conductive member 210 to the point where the spring piece 213 comes into contact with the negative electrode 130 after the all-solid-state battery 100 is assembled. This allows the electrode stacked body 110 to be pressed by the spring piece 213, making it possible to maintain a favorable electrical connection between the elastic conductive member 210 and the negative electrode 130 of the electrode stacked body 110.

The thickness of the elastic conductive member 210 excluding the supported portions 211 can be reduced by forming the spring part 213 using a spring piece in the elastic conductive member 210. For example, before the all-solid-state battery 100 is assembled, the thickness (overall height) of the elastic conductive member 210 excluding the supported portions 211 can be the sum of the thickness of the plate member that constitutes the flat portion 212 and the height of the spring piece 213. Specifically, the thickness of the elastic conductive member 210 excluding the supported portions 211 can be 0.7 mm by combining the thickness of the plate member (0.2 mm) and the height of the spring piece (0.5 mm).

The spring piece 213 may have a length (length from the boundary 213a to the leading end 213b) of 3 mm, for example, and a width (length in a direction orthogonal to the length direction) of 1.5 mm, for example. Note that the elastic conductive member having a spring piece may have a plurality of spring pieces. In such a case, for reasons such as prevention of resonance, the shapes of the spring pieces, including their widths and lengths, may differ from one another. The thickness of the elastic conductive member 210 excluding the supported portions 211 is preferably 1.2 mm or less, more preferably 1 mm or less, and particularly preferably 0.8 mm or less. On the other hand, in order to ensure that the spring part 213 generates a favorable pressing force, the thickness of the elastic conductive member 210 excluding the supported portions 211 is preferably 0.3 mm or more, more preferably 0.4 mm or more, and particularly preferably 0.5 mm or more.

Further, the positions of the edges of the elastic conductive member 210, i.e., the positions of the supported portions 211, can be freely set in the height direction (thickness direction of the elastic conductive member 210). Therefore, the distance between the sealing body 160 and the point where the spring piece 213 comes into contact with the negative electrode 130 is not increased even when a gap is formed between the sealing body 160 and the elastic conductive member 210. As a result, a gap between the sealing body 160 and the electrode stacked body 110 can be prevented from increasing in size, and therefore the capacity of the all-solid-state battery 100 can be increased. Note that the thickness direction of the elastic conductive member 210 is the up-down direction (the height direction of the all-solid-state battery 100) in FIG. 2 and can also be said to be a direction orthogonal to the bottom face of the flat portion 212.

The overall thickness of the elastic conductive member 210 including the supported portions 211 can be set as appropriate according to the height of the side wall 152 of the recessed container 150 from the bottom 151. Also, it is sufficient that the supported portions 211 have a height necessary for locking to the supports 153. The overall thickness of the elastic conductive member 210 including the supported portions 211 can be, for example, 3 mm or less, is preferably 2.7 mm or less, and more preferably 2.5 mm or less.

In the elastic conductive member 210, the spring piece 213 may be formed by cutting out the flat portion 212 as described above, or a separate spring piece 213 may be attached to the bottom face of the flat portion 212 having a planar shape by welding the spring piece 213, for example. Alternatively, a base for attaching the spring piece 213 may be provided in advance separately from the flat portion 212, and the spring piece 213 may be attached to the base to form a spring part as a whole. That is, the spring piece 213 may rise directly from the flat portion 212 or may rise from the flat portion 213 via another element such as a base. Further, the spring piece 213 may be in a form in which both ends of the spring piece 213 are supported by the flat portion 212 to have a shape protruding toward the electrode stacked body 110.

In the all-solid-state battery 100 shown in FIG. 2, when the elastic conductive member 210 is to be installed, the electrode stacked body 110 is first accommodated in the recessed container 150, and the elastic conductive member 210 is placed on the upper face of the electrode stacked body 110. In a state in which the elastic conductive member 210 is placed on the upper face of the electrode stacked body 110, the leading ends of the supported portions 211 are positioned between the upper face of the electrode stacked body 110 and the supports 153, i.e., the lower faces of the top walls, in the axial direction of the electrode stacked body 110 (in the up-down direction in FIG. 2). The supported portions 211 of the elastic conductive member 210 are then supported by the supports 153 while being pushed toward the bottom 151 of the recessed container 150. In more detail, the leading ends of the supported portions 211 are locked to the supports 153, i.e., the lower faces of the top walls. Since the supported portions 211 are pushed downward, the spring piece 213 of the elastic conductive member 210 is pushed in a direction opposite to the negative electrode 130 in contact with the electrode stacked body 110. At this time, the spring piece 213 presses the electrode stacked body 110 toward the bottom 151 of the recessed container 150 due to its elastic force. This allows the elastic conductive member 210 to come into more stable contact with the electrode stacked body 110 and prevents displacement caused by vibration or the like, making it possible to maintain favorable electrical connection.

In the all-solid-state battery 100 shown in FIG. 2, the recessed container 150 has two supports 153 and 153, but the number of supports 153 may be three or more. The supported portions 211 of the elastic conductive member 210 may be formed in accordance with the number of supports 153.

Note that examples of a method for fixing the edge (supported portions 211) of the elastic conductive member 210 to the inner peripheral surface of the side wall 152 of the recessed container 150 include a method for bonding the edges of the elastic conductive member 210 to the inner peripheral surface of the side wall 152 of the recessed container 150.

Note that it is preferable that a gap is formed between the elastic conductive member 210 and the sealing body 160 as shown in FIG. 2. That is, it is preferable that the elastic conductive member 210 is not in contact with the sealing body 160. This makes it possible to avoid contact between the elastic conductive member 210 and the sealing body 160 even if the elastic conductive member 210 is pushed toward the sealing body 160 due to a change in the volume of the electrode stacked body 110.

Although the electrode stacked body 110 is disposed in the all-solid-state battery 100 shown in FIG. 2 such that the positive electrode 120 is located on the inner bottom face side of the recessed container 150 and the negative electrode 130 is located on the sealing body 160 side (elastic conductive member 210 side), the all-solid-state battery can also be constructed by disposing the electrode stacked body such that the negative electrode is located on the inner bottom face side of the recessed container and the positive electrode is located on the sealing body side (elastic conductive member side).

### (Electrode)

In the all-solid-state battery according to the present invention, either one of the positive electrode and the negative electrode may be the electrode according to the present invention, or both the positive electrode and the negative electrode may be the electrode according to the present invention.

When an all-solid-state battery has the electrode according to the present invention only as the positive electrode, the negative electrode used can be one of the following: a negative electrode with the same configuration as the electrode according to the present invention, except that the composition of the current collector is different; a negative electrode with the same configuration as the electrode according to the present invention, except that it does not contain a sulfide-based solid electrolyte and contains a solid electrolyte different from a sulfide-based solid electrolyte; a negative electrode using a metallic lithium or lithium-aluminum alloy foil as is; a negative electrode having a metallic lithium or lithium-aluminum alloy foil and a current collector; and so on.

When an all-solid-state battery has the electrode according to the present invention only as the negative electrode, the positive electrode used can be one of the following: a positive electrode with the same configuration as the electrode according to the present invention except that the composition of the current collector is changed; a positive electrode with the same configuration as the electrode of the present invention except that it does not contain a sulfide-based solid electrolyte and contains a solid electrolyte different from a sulfide-based solid electrolyte; and so on.

In all-solid-state secondary batteries, corrosion of the current collector is more likely to occur at the positive electrode than at the negative electrode. Therefore, from the viewpoint of better ensuring the effect of suppressing the increase in the internal resistance of the battery, it is preferable that at least the positive electrode in the all-solid-state secondary battery of the present invention is the electrode according to the present invention, and it is more preferable that both the positive electrode and the negative electrode are the electrodes according to the present invention.

### (Solid Electrolyte Layer)

Specific examples of solid electrolytes that constitute the solid electrolyte layer in an all-solid-state battery include the same solid electrolytes that were previously exemplified as those that can be included in the positive electrode mixture. Among the solid electrolytes listed above as examples, it is preferable to use sulfide-based solid electrolytes, it is more preferable to use a sulfide-based solid electrolyte having an argyrodite-type crystal structure, and it is even more preferable to use a sulfide-based solid electrolyte represented by the general composition formula (1), the general composition formula (2), or the general composition formula (3), because they have high lithium-ion conductivity and also functions for improving the moldability.

The solid electrolyte layer can be formed using any of the following methods: a method of compressing a solid electrolyte through compression molding or the like; a method of applying a solid electrolyte layer-forming composition prepared by dispersing a solid electrolyte in a solvent onto a substrate, the positive electrode, or the negative electrode, drying the composition, and performing compression molding such as pressing as needed; and the like.

The solid electrolyte layer may contain a binder such as acrylic resin or fluororesin to maintain its shape.

The solid electrolyte layer may include a porous body such as a resin non-woven fabric as a support. In this case, a solid electrolyte sheet having the aforementioned support is obtained.

As the solvent used in the solid electrolyte layer-forming composition, it is desirable to select a solvent that is less likely to deteriorate the solid electrolyte, similar to the solvent for use in the mixture-containing composition, it is preferable to use any of the same solvents as those listed above as various examples of the solvent for the mixture-containing composition, and it is particularly preferable to use a super-dehydrated solvent having a water content of 0.001% by mass (10 ppm) or less.

The thickness of the solid electrolyte layer is preferably 10 to 200 µm.

### (Method for Manufacturing Electrode Stacked Body)

There are no particular limitations on the method for manufacturing an electrode stacked body used when constructing the all-solid-state battery using an electrode stacked body having a positive electrode, a negative electrode, and a solid electrolyte layer interposed between the positive electrode and the negative electrode, but the electrode stacked body can be manufactured using a manufacturing method having the following first to third steps, for example.

In the first step, the mixture (positive electrode mixture or negative electrode mixture) is introduced into a mold and subjected to compression molding. The surface pressure of the compression molding in the first step is preferably, for example, 30 to 500 MPa.

In the next second step, a porous metal substrate is placed on the mixture that has been subjected to compression molding in the first step, and pressure is applied to the mixture and the porous metal substrate in the next third step. The application of the pressure in the third step further compresses the mixture while embedding the porous metal substrate in the mixture from an end on the mixture side, and compresses the porous metal substrate in the thickness direction, thereby integrating the mixture layer (positive electrode mixture layer or negative electrode mixture layer) with the porous metal substrate to form an electrode (positive electrode or negative electrode).

As described above, the porous metal substrate is compressed in the thickness direction in the third step. From the viewpoint of ensuring more reliable bonding between the porous metal substrate and the mixture layer, the degree of compression is preferably such that the thickness of the porous metal substrate after compression is preferably 30% or less, more preferably 20% or less, and particularly preferably 10% or less of the thickness thereof before compression. Also, from the viewpoint of retaining a certain amount or more of the mixture in the pores of the porous metal substrate and increasing the bonding strength between the porous metal substrate and the mixture layer, the thickness of the porous metal substrate after compression in the third step is preferably 1% or more and more preferably 2% or more of the thickness thereof before compression.

In order to sufficiently increase the density of the mixture layer by compression molding the mixture, the surface pressure during the application of pressure in the third step is, for example, preferably 800 MPa or more, more preferably 1000 MPa or more, and particularly preferably 1200 MPa or more. Although the upper limit of the surface pressure during the application of pressure in the third step is not particularly specified, the upper limit is usually approximately 2000 MPa in an ordinary pressure device.

Through the first to third steps, it is possible to obtain an electrode (positive electrode or negative electrode) in which at least a portion of the porous metal substrate including the end on the mixture layer side (a certain range in the thickness direction from the end of the porous metal substrate) is embedded in the surface layer of the mixture layer and integrated with the mixture layer, and the other end of the porous metal substrate is exposed on the surface of the electrode.

If the surface pressure during the application of pressure in the third step is increased, a crack may form when the porous metal substrate is compressed. However, even when the substrate is broken into pieces, these pieces can contribute to reducing contact resistance as long as ends of the pieces are exposed on the surface of the electrode.

A positive electrode and a negative electrode are produced through the first, second, and third steps, and placed on both sides of a solid electrolyte layer, and pressure is applied as needed, to form an electrode stacked body.

A preliminary process of introducing the solid electrolyte into a mold and performing compression molding may be provided before the first step, the mixture (positive electrode mixture or negative electrode mixture) may be placed on the solid electrolyte obtained through compression molding in the preliminary step, and then the first step, the second step, and the third step may be performed successively to manufacture an integrated product of the solid electrolyte layer and the electrode (positive or negative electrode), and the integrated product may be used for the electrode stacked body.

The surface pressure of the compression molding in the preliminary step is preferably, for example, 30 to 120 MPa.

Alternatively, an electrode stacked body can also be manufactured as follows: one of the positive electrode and the negative electrode is formed on one side of the solid electrolyte layer through the preliminary step, the first step, the second step, and the third step, and then another electrode (negative electrode or positive electrode) is formed on the other side of the solid electrolyte layer by successively performing the first step, the second step, and the third step.

### (Exterior Body)

As the exterior body of the all-solid-state battery, it is possible to use: a battery container having a recessed container (exterior container) and a sealing body (lid) as shown in FIG. 2; a flat (such as coin-type or button-type) battery container or cylindrical (such as circular cylindrical or prismatic) battery container having a metal exterior can and a metal sealing body; a battery container constituted by a laminated film exterior body constituted by a metal laminated film such as an aluminum laminated film; and the like.

In the case of a battery container having a recessed container and a sealing body as shown in FIG. 2, the recessed container can be made of a ceramic material or resin. Also, it is possible to use a sealing body made of a ceramic material, resin, or metal (an iron-based alloy such as an iron-nickel alloy or an iron-nickel-cobalt alloy, or the like).

In the recessed container, the connection terminal and the conductive path that connects an electrode in an electrode stacked body and the connection terminal can be made of metal such as manganese, cobalt, nickel, copper, molybdenum, silver, palladium, tungsten, platinum, or gold, or an alloy containing such a metal, or the like.

The recessed container and the sealing body can be sealed by bonding them together with an adhesive. In addition, when a metal sealing body is used, as shown in FIG. 2, the sealing body side of the side wall is made of metal by placing a seal ring 200 made of metal (an iron-based alloy such as an iron-nickel alloy or an iron-nickel-cobalt alloy, or the like) on the sealing body 160 side (upper side in FIG. 2) of the side wall 152 of the recessed container 150, for example, and then the recessed container and the sealing body may be sealed by welding them together.

The shape of the exterior body in a plan view may be a circular or polygonal shape such as a quadrilateral shape (square or rectangle). Furthermore, in the case of polygons, their corners may be curved.

### (Elastic Conductive Member)

There is no particular limitation on the elastic conductive member as long as it functions as a flat spring that presses the electrode stacked body toward the inner bottom face of the recessed container. Specific examples thereof include, as shown in FIGS. 2 and 4, an elastic conductive member having the flat portion 212 that includes the supported portions 211 shaped according to the supports 153 of the recessed container 150 and the spring part (spring piece) 213; an elastic conductive member having a cross-section having locking portions shaped according to the supports of the recessed container and recesses that press the electrode stacked body; and the like.

The elastic conductive member can be formed by a plate or the like made of nickel, iron, copper, chromium, cobalt, titanium, or aluminum, or an alloy thereof. Among the metals that may constitute the elastic conductive member and are mentioned above, a stainless steel plate and a stainless steel plate plated with nickel are preferable, and in order to facilitate the elastic conductive member to perform the function of a flat spring, stainless steel for a spring, such as SUS301-CSP, SUS304-CSP, SUS316-CSP, SUS420J2-CSP, SUS631-CSP, and SUS632J1-CSP, is more preferable.

The thickness of the metal plate that constitutes the elastic conductive member is preferably 0.05 mm or more, more preferably 0.07 mm or more, and particularly preferably 0.1 mm or more, in order to maintain a certain level of pressing force against the electrode stacked body. On the other hand, in order to prevent the elastic conductive member from being excessively thick, which would increase the storage volume in the battery container, and make the elastic conductive member easily deformable such that the elastic conductive member can be readily locked to the side wall of the recessed container, the thickness of the metal plate that constitutes the elastic conductive member is preferably 0.5 mm or less, more preferably 0.4 mm or less, and particularly preferably 0.3 mm or less.

### (Conductive Connecting Member)

As in the all-solid-state battery shown in FIG. 2, it is preferable to arrange a conductive connecting member between the electrode stacked body and the inner bottom face of the recessed container in the battery container in order to prevent gaps from forming due to variations in the thickness (height) of individual members, to electrically connect the conductive connecting member and the conductive path of the recessed container. That is, when the conductive connecting member is disposed, an electrode on the inner bottom face side of the recessed container in the electrode stacked body (the positive electrode 110 in the case of the all-solid-state battery 100 shown in FIG. 2) and the conductive path of the recessed container (the conductive path 171 in the case of the all-solid-state battery 100 shown in FIG. 2) are electrically connected via the conductive connecting member (the porous metal substrate 190 in the case of the all-solid-state battery shown in FIG. 2).

Examples of conductive connecting members include the porous metal substrate that constitutes the current collector of the electrode mentioned above. In particular, foamed metal substrates readily undergo plastic deformation when force is applied in the thickness direction. Therefore, when forming an all-solid-state battery, they are easily compressed and deformed in accordance with the degree of variation (deviation from the design value) in the thickness (height) of individual components, such as when pressed from the electrode stacked body, thus reducing their thickness. This improves the contact between the electrode on the porous metal layer side of the electrode stacked body and the current collector, and when a large number of all-solid-state batteries are manufactured, the degrees of electrical conduction between the porous metal layers and the electrode stacked bodies in individual all-solid-state batteries can be made uniform. When the porous metal substrate, in particular, the foamed metal substrate, is used in an all-solid-state battery, the above effects make it possible to further reduce internal resistance and reduce variations in individual internal resistances.

It is preferable to use, as the foamed metal substrate, "Celmet (registered trademark)" manufactured by Sumitomo Electric Industries, Ltd., similar to the current collector of the electrode.

In an all-solid-state battery, the thickness of the foamed metal substrate after battery assembly is preferably 20 µm or more, and more preferably 100 µm or more, from the viewpoint of ensuring favorable effects of the foamed metal substrate functions. Also, there is no particular limitation on the upper limit of the thickness of the foamed metal substrate in the all-solid-state battery. However, from the viewpoint of suppressing the volume of a component that is not involved in power generation in the battery container, the upper limit of the thickness thereof is preferably 500 µm or less and more preferably 300 µm or less.

The thickness of the conductive connecting member is determined from the maximum width in the thickness direction in an image obtained by observing its cross-section extending in the thickness direction using a SEM at a magnification of 50 to 1000 (the values in Examples described later were determined using these methods).

As described above, the conductive connecting member is preferably a porous metal substrate compressed in the thickness direction, and the thickness thereof is preferably 90% or less, and more preferably 80% or less of the thickness of a porous metal substrate (thickness before compression) used to form a conductive connecting member. Therefore, the porous metal substrate used to form the conductive connecting member preferably has a thickness of 150 to 3000 µm.

Also, from the viewpoint of further facilitating plastic deformation caused by pressing the electrode stacked body against the porous metal substrate used to form the conductive connecting member, ensuring a favorable effect of reducing the internal resistance of the all-solid-state battery, and ensuring a favorable effect of suppressing its variation, the porosity of the porous metal substrate (the porosity before compression) is preferably 99.5% or less, more preferably 99% or less, and even more preferably 98.5% or less. From the viewpoint of ensuring sufficient strength for use, the porosity thereof is preferably 80% or more, more preferably 90% or more, and even more preferably 95% or more.

### Examples

Hereinafter, the present invention will be described in detail based on examples. However, the examples given below do not limit the scope of the present invention.

### (Example 1)

A negative electrode mixture was prepared by mixing lithium titanate (Li₄Ti₅O₁₂, negative electrode active material) with an average particle size of 2 µm, a sulfide-based solid electrolyte (Li₆PS₅Cl) with an average particle size of 0.7 µm, and graphene (conductive assistant) in a mass ratio of 50:41:9.

A positive electrode mixture was prepared by mixing LiCoO₂ (positive electrode active material) with an average particle size of 5 µm, a sulfide-based solid electrolyte (Li₆PS₅Cl) with an average particle size of 0.7 µm, and graphene in a mass ratio of 65:30.7:4.3, a LiNbO₃ coating layer being formed on the surface of the positive electrode active material.

Then, a temporarily molded layer for the solid electrolyte layer was formed by placing a sulfide-based solid electrolyte (Li₆PS₅Cl) powder with an average particle size of 0.7 µm in a powder molding die, and performing compression molding at a surface pressure of 70 MPa using a pressing machine. Further, the negative electrode mixture was placed on an upper face of the temporarily molded layer for the solid electrolyte layer and subjected to compression molding at a surface pressure of 50 MPa, and then a temporarily molded layer for the negative electrode was further formed on the temporarily molded layer for the solid electrolyte layer.

Then, a foamed metal substrate ["Celmet" (registered trademark) made of a Ni-Cr alloy with a Ni content of 95% by mass and a Cr content of 5% by mass] from Sumitomo Electric Industries, Ltd., cut to a diameter of 7.25 mm (thickness: 1.1 mm, porosity: 98%, weight per area of 347 g/m²), was placed on the temporarily molded layer for the negative electrode formed on the temporarily molded layer for the solid electrolyte layer. Compression molding was then performed at a surface pressure of 300 MPa to form an integrated product of the solid electrolyte layer and the negative electrode.

Further, the die was turned upside down, the positive electrode mixture was placed on the upper face (the surface opposite to the surface having the negative electrode) of the solid electrolyte layer in the die, and subjected to compression molding at a surface pressure of 50 MPa, and thus a temporarily molded layer for the positive electrode was formed on the solid electrolyte layer.

Then, a foamed metal substrate, which is made of a Ni-Cr alloy and has the same composition as that used for the negative electrode, was cut, and the resulting foamed metal substrate was placed on the temporarily molded layer for the positive electrode formed on the solid electrolyte layer, and subjected to compression molding at a surface pressure of 1400 MPa, to form an electrode stacked body.

In the obtained electrode stacked body, the thickness of the negative electrode mixture layer of the negative electrode, the thickness of the porous metal substrate, and the thickness of a portion of the porous metal substrate embedded in the negative electrode mixture layer were respectively 1400 µm, 60 µm (5% of the thickness of the porous metal substrate before use in the negative electrode), and 60 µm (100% of the total thickness of the porous metal substrate). Also, the area percentage of part of the negative electrode mixture exposed on the surface of the negative electrode was 7%.

In the obtained electrode stacked body, the thickness of the positive electrode mixture layer of the positive electrode, the thickness of the porous metal substrate, and the thickness of a portion of the porous metal substrate embedded in the positive electrode mixture layer were respectively 800 µm, 60 µm (5% of the thickness of the porous metal substrate before use in the positive electrode), and 60 µm (100% of the total thickness of the porous metal substrate). Also, the area percentage of part of the positive electrode mixture exposed on the surface of the positive electrode layer was 7%.

A Ni foamed metal substrate, which was cut to a diameter of 7.25 mm, was placed on an inner bottom face of a recessed container (the depth of ceramic material was 2.5 mm), which had a structure similar to that shown in FIGS. 2 and 3, was made of a ceramic material, and had a seal ring made of an iron-nickel-cobalt alloy above the side wall. The substrate was brought into contact with the conductive path of the positive electrode, and the electrode stacked body was placed thereon with the positive electrode facing downward. An elastic conductive member, formed from a stainless steel plate (with a thickness of 0.3 mm) and having the same shape as those shown in FIGS. 2 and 4, was placed on the negative electrode of the electrode stacked body, with its supported portions locked to the supports of the recessed container. Then, the spring piece of the elastic conductive member was bent toward the negative electrode of the electrode stacked body, such that its leading end was pointed toward the flat portion. The spring piece was then brought into contact with the negative electrode of the electrode stacked body at a point closer to the boundary with the flat portion than the leading end, so as to press the electrode stacked body toward the inner bottom face of the recessed container. Subsequently, a sealing body constituted by an iron-nickel-cobalt alloy plate (with a thickness of 0.1 mm) was placed on the seal ring of the recessed container, and the sealing body and the recessed container (seal ring) were welded together, thereby sealing the battery container to obtain an all-solid-state secondary battery. As described above, in the resulting all-solid-state secondary battery, the elastic conductive member pressed the electrode stacked body toward the inner bottom face of the recessed container, causing the electrode stacked body to press the conductive connecting member constituted by the foamed metal substrate. The thickness of the conductive connecting member in the all-solid-state secondary battery was 200 µm.

### (Example 2)

An all-solid-state secondary battery was produced in the same manner as in Example 1, except that the foamed metal substrates serving as current collectors for the positive electrode and the negative electrode were changed to substrates made of a Ni-Cr alloy with a Ni content of 85% by mass and a Cr content of 15% by mass (weight per area: 388 g/m²).

### (Example 3)

An all-solid-state secondary battery was produced in the same manner as in Example 1, except that the foamed metal substrates serving as current collectors for the positive electrode and the negative electrode were changed to substrates made of a Ni-Cr alloy with a Ni content of 75% by mass and a Cr content of 25% by mass (weight per area: 440 g/m²).

### (Example 4)

An all-solid-state secondary battery was produced in the same manner as in Example 1, except that the foamed metal substrates serving as current collectors for the positive electrode and the negative electrode were changed to substrates made of a Ni-Cr alloy with a Ni content of 65% by mass and a Cr content of 35% by mass (weight per area: 508 g/m²).

### (Comparative Example 1)

An all-solid-state secondary battery was produced in the same manner as in Example 1, except that the foamed metal substrates serving as current collectors for the positive electrode and the negative electrode were changed to substrates made of pure Ni that do not contain Cr (weight per area: 330 g/m²).

### (Comparative Example 2)

An all-solid-state secondary battery was produced in the same manner as in Example 1, except that the foamed metal substrates serving as current collectors for the positive electrode and the negative electrode were changed to substrates made of a Ni-Sn alloy with a Ni content of 85% by mass and a Sn content of 15% by mass (weight per area: 388 g/m²).

The all-solid-state secondary batteries of the examples and the comparative examples were subjected to constant current charging at a current value of 4 mA to a voltage of 2.6 V, then constant voltage charging at a voltage of 2.6 V to a current value of 0.05 mA, and thereafter constant current discharging at a current value of 0.4 mA to a voltage of 1.0 V. Thereafter, for each battery, the internal resistance was measured at 1 kHz with an applied voltage of 10mV, and the initial resistance was determined.

Furthermore, for each battery whose initial resistance was measured, the battery was stored in a thermostatic chamber at 115°C for 7 days, taken out from the chamber, and cooled to room temperature, constant current charging, constant voltage charging, constant current discharging, and internal resistance measurement were performed under the same conditions as when the initial resistance was measured to determine the resistance after storage.

Then, for each battery, the resistance increase rate was calculated by dividing the difference between the resistance after storage and the initial resistance by the initial resistance and expressing the obtained value in percentage.

Furthermore, batteries whose resistance after storage was measured were disassembled, and whether the current collectors of the positive electrode and the negative electrode corroded were checked through SEM.

These results are shown in Table 1.

**[Table 1]**

| | Current collectors for positive electrode and negative electrode | | Initial resistance (Ω) | Resistance increase (%) | Whether current collector corroded |
|---|---|---|---|---|---|
| | Material | Weight per area (g/m²) | | | |
| Ex. 1 | Ni-Cr alloy (Cr: 5% by mass) | 347 | 12.8 | 70 | No |
| Ex. 2 | Ni-Cr alloy (Cr: 15% by mass) | 388 | 12.9 | 65 | No |
| Ex. 3 | Ni-Cr alloy (Cr: 25% by mass) | 440 | 13.0 | 63 | No |
| Ex. 4 | Ni-Cr alloy (Cr: 35% by mass) | 508 | 19.4 | 56 | No |
| Comp. Ex. 1 | Ni | 330 | 11.6 | 92 | Yes |
| Comp. Ex. 2 | Ni-Sn alloy (Sn: 15% by mass) | 388 | 13.0 | 82 | Yes |

As shown in Table 1, the all-solid-state secondary batteries in Examples 1 to 4, in which the current collectors for the positive electrode and the negative electrode were made of a Ni-Cr alloy having a suitable composition, had a resistance increase rate due to high-temperature storage and suppressed increase in resistance compared to the battery in Comparative Example 1, in which a Ni current collector was used, and the battery in Comparative Example 2, in which the current collectors were made of a Ni-Sn alloy that did not contain Cr.

The all-solid-state secondary batteries in Examples 1 to 3, in which the Cr content in the Ni-Cr alloy was 30% by mass or less had lower current collector resistance compared to Example 4, which had a higher Cr content, and this resulted in lower initial battery resistance.

After measuring the resistance after storage, the batteries in the examples and comparative examples were disassembled and the electrodes (the positive electrode and the negative electrode) were examined. In the batteries in Comparative Examples 1 and 2, a bulk layer-like product, thought to be NiS (nickel sulfide), was observed. In contrast, this formation was suppressed in the batteries in Examples 1 and 2, indicating that corrosion of the current collector due to reaction with the sulfide-based solid electrolyte contained in the electrodes and the gases derived therefrom was effectively suppressed.

The invention may be embodied in other forms without departing from the essential characteristics thereof. The embodiments disclosed in this application are examples, and the present invention is not limited to these embodiments. The scope of the present invention should be construed in view of the appended claims, rather than the foregoing description, and all changes that come within the meaning and range of equivalency of the claims are intended to be embraced therein.

### Industrial Applicability

The all-solid-state battery according to the present invention is applicable to applications similar to those for conventionally known primary batteries and secondary batteries, and the all-solid-state battery according to the present invention has high heat resistance and thus can be preferably used in applications where the batteries are exposed to high temperature. The electrode for an all-solid-state battery according to the present invention can constitute the all-solid-state secondary battery according to the present invention.

### Description of Reference Numerals

- 100: All-solid-state battery
- 110: Electrode stacked body
- 120: Positive electrode
- 121: Positive electrode mixture layer
- 122: Positive electrode current collector
- 130: Negative electrode
- 131: Negative electrode mixture layer
- 132: Negative electrode current collector
- 140: Solid electrolyte layer
- 150: Recessed container
- 151: Bottom
- 152: Side wall
- 153: Support
- 160: Sealing body
- 170: Connection terminal
- 171: Conductive path
- 180: Connection terminal
- 181: Conductive path
- 190: Porous metal substrate (conductive connecting member)
- 200: Seal ring
- 210: Elastic conductive member
- 211: Supported portion
- 212: Flat portion
- 213: Spring part (spring piece)
- 213a: Boundary
- 213b: Leading end

## Claims

1. An electrode for an all-solid-state battery, comprising:
a mixture containing an active material and a sulfide-based solid electrolyte; and
a current collector,
wherein the current collector is made of an alloy containing Ni and Cr,
a Ni content in the alloy is 60% by mass or more, and
a Cr content in the alloy is 0.1% by mass or more and 40% by mass or less.

2. The electrode for an all-solid-state battery according to claim 1,
wherein the Ni content in the alloy is 70% by mass or more.

3. The electrode for an all-solid-state battery according to claim 1,
wherein the Cr content in the alloy is 30% by mass or less.

4. The electrode for an all-solid-state battery according to claim 1, comprising
an argyrodite-type solid electrolyte as the sulfide-based solid electrolyte.

5. The electrode for an all-solid-state battery according to claim 1,
wherein the current collector is constituted by a porous metal substrate, and pores of the porous metal substrate are filled with at least a portion of the mixture.

6. The electrode for an all-solid-state battery according to claim 5,
wherein one end of the porous metal substrate is exposed on a surface of the electrode.

7. The electrode for an all-solid-state battery according to claim 5,
wherein the porous metal substrate has a weight per area of 600 g/m² or less.

8. An all-solid-state battery comprising:
a positive electrode;
a negative electrode; and
a solid electrolyte layer,
wherein at least one of the positive electrode and the negative electrode is the electrode for an all-solid-state battery according to any one of claims 1 to 7.

9. The all-solid-state battery according to claim 8,
wherein at least the positive electrode is the electrode for an all-solid-state battery according to any one of claims 1 to 7.
